**Europäisches Patentamt**

**European Patent Office**

**Office européen des brevets**

(19)

(11) Veröffentlichungsnummer: **0 468 295 A2**

## (12) EUROPÄISCHE PATENTANMELDUNG

(21) Anmeldenummer: **91111579.8**

(22) Anmeldetag: **11.07.91**

(51) Int. Cl.5: **G01M 15/00**

(30) Priorität: **25.07.90 DE 4023666**

(43) Veröffentlichungstag der Anmeldung:
**29.01.92 Patentblatt 92/05**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**

**W-8000 München 2(DE)**

(72) Erfinder: **Messbacher, Gerd**
**Hainstrasse 2**
**W-8501 Tuchenbach(DE)**
Erfinder: **Rudolph, Roland**
**Schleifweg 23**
**W-8510 Fürth(DE)**

(54) **Messgerät für Betriebsparameter von Verbrennungsmotoren, und Verwendung einer Leseeinrichtung für kartenförmige Träger für ein derartiges Messgerät.**

(57) Das Meßgerät zur Erfassung bestimmter Betriebsparameter von Verbrennungsmotoren, insbesondere ein Zündungstester, Abgastester bzw. Rußdichtemeßgerät, ist mit einer Leseeinrichtung (CL) ausgerüstet. Hiermit können für die Messung der Betriebsparameter benötigte und für den jeweiligen Motorentyp charakteristische Kennwerte von einem kartenförmigen Träger (C) eingelesen werden. Als kartenförmige Träger (C) sind insbesondere berührungslos abtastbare Chipkarten bzw. Träger mit zumindest teilweise magnetisch oder optisch abtastbarer Oberfläche (MS) geeignet. Bei den Kennwerten handelt es sich insbesondere um Meßbereiche, Soll- und Grenzwerte.

Die Erfindung betrifft ein Meßgerät Zur Erfassung bestimmter Betriebsparameter von Verbrennungsmotoren, und die Verwendung einer Leseeinrichtung für kartenförmige Träger bei einem derartigen Meßgerät.

Insbesondere in der Kraftfahrzeugtechnik wird in zunehmendem Maße eine Vielzahl von Meßgeräten benötigt. Aufgrund der ständig steigenden Anforderungen z.B. an den Kraftstoffverbrauch, die Umweltverträglichkeit und das Abgasverhalten von Verbrennungsmotoren sind zum einen die Kraftfahrzeughersteller gezwungen, bereits bei der Entwicklung von Testmotoren bzw. Testfahrzeugen eine Vielzahl von Betriebsparametern zu erfassen. Desweiteren muß bei der Produktion von Verbrennungsmotoren ständig die Funktionsfähigkeit zumindest einiger Testaggregate im Rahmen der Qualitätskontrolle überwacht werden. Ferner muß jeder Verbrennungsmotor das Werk in optimal eingestelltem Zustand verlassen. Für all diese Aufgaben wird eine Vielzahl von Meßgeräten zur Erfassung bestimmter Motorbetriebsparameter benötigt. Dabei kann es sich z.B. um sogenannte Zündungstester, Abgastester für Benzinmotoren, Rußdichtemeßgeräte zur Erfassung der Partikelströmungsdichte im Abgas von Dieselmotoren und vieles mehr handeln.

Derartige Meßgeräte werden aber auch z.B. in Kraftfahrzeugwerkstätten zur Instandsetzung und dem regelmäßigen Service der Motoren von im Gebrauch befindlichen Fahrzeugen benötigt. So werden z.B. sogenannte Zündungstester zur Einstellung, Überwachung und Aufrechterhaltung des optimalen Betriebszustandes der Zündanlagen von Otto-Motoren eingesetzt. Ferner dienen z.B. sogenannte Abgastester bzw. Rußdichtemeßgeräte zur Überwachung des Abgasverhaltens von Verbrennungsmotoren insbesondere im Rahmen sogenannter Abgas-Sonderuntersuchungen.

Beim Betrieb derartiger Meßgeräte insbesondere in Kraftfahrzeugwerkstätten liegt die Schwierigkeit vor, unter Umständen mit Hilfe eines einzigen Meßgerätes die jeweils gewünschten Betriebsparameter von Verbrennungsmotoren unterschiedlichster Herkunft, Bauart und Alter erfassen zu können. Dies hat seine Ursache in der ungeheueren Vielfalt der auf dem Markt befindlichen Verbrennungsmotoren. So gibt es zum einen eine große Anzahl an von Kraftfahrzeugherstellern, die wiederum jeweils eine Vielzahl unterschiedlichster Motorentypen vertreiben. Desweiteren gibt es von jedem Motortyp insbesondere baujahr- und zulassungslandspezifische Varianten. Aufgrund der unterschiedlichen, gesetzlichen Vorschriften z.B. in Bezug auf das Abgasverhalten von Verbrennungsmotoren ist es durchaus möglich, daß es für ein und denselben Basismotor jeweils in bestimmten Details unterschiedliche und speziell für die Zulassung z.B. in den Vereinigten Staaten von Amerika bzw. in Frankreich bzw. in der Schweiz vorgesehene Varianten gibt. Voraussetzung für eine erfolgreiche Erfassung der jeweils gewünschten Betriebsparameter ist aber in aller Regel, daß dem Meßgerät möglichst vor Beginn der Messung für den jeweils vorliegenden Motortyp charakteristische Kennwerte vorgegeben werden. Hierbei handelt es sich insbesondere um Meßbereiche, Soll- und Grenzwerte, welche abhängig von der Art der zu erfassenden Betriebsparameter und abhängig vom Typ des jeweils zu untersuchenden Verbrennungsmotors unterschiedlichste Werte annehmen können. Es ist auch möglich, die Messung selbst betreffende charakteristische Kennwerte vorzugeben, z.B. individuelle Meßzyklen, Meßverläufe, Meßzeiten und vieles mehr.

Zur Anpassung der in Frage stehenden Meßgeräte an den jeweiligen Motortyp ist es bereits bekannt, steckbare Speichermodule, insbesondere sogenannte EPROM's, zu verwenden. Es muß somit für jeden Motortyp ein derartiges Speichermodul vorrätig gehalten werden, in dem die für den jeweiligen Motortyp charakteristischen Kennwerte hinterlegt sind. Derartige Speichermodule haben aber den Nachteil, daß sie relativ platzaufwendig sind. Insbesondere beim Einsatz der Meßgeräte in Kraftfahrzeugwerkstätten werden selbst bei Zugehörigkeit dieser Werkstatt zu einem einzigen Kraftfahrzeughersteller sehr umfangreiche Sammlungen derartiger Speichermodule benötigt. Hierdurch treten insbesondere in Kraftfahrzeugwerkstätten Probleme in der Handhabung, Bevorratung und Aufbewahrung der Speichermodule auf. Dies hat seine Ursache darin, daß pro Arbeitstag eine Vielzahl unterschiedlichster Fahrzeugtypen mit unterschiedlichsten Verbrennungsmotoren aus einer Vielzahl von Jahrgängen und unter Umständen sogar von verschiedenen Herstellern eine Werkstatt durchlaufen müssen.

Der Erfindung liegt die Aufgabe zugrunde, ein Meßgerät zur Erfassung bestimmter Betriebsparameter von Verbrennungsmotoren anzugeben, welches auf einfache Weise schnell mit den charakteristischen Kennwerten des jeweils zu untersuchenden Motortypes versorgt werden kann.

Die Aufgabe wird gelöst mit dem im Anspruch 1 angegebenen Meßgerät. Vorteilhafte Ausführungsformen der Erfindung sind in den Unteransprüchen angegeben. Desweiteren sind der nebengeordnete Anspruch 7 und weitere Unteransprüche auf die Verwendung einer Leseeinrichtung zur Lösung der der Erfindung zugrundeliegenden Aufgabe bei den in Frage stehenden Meßgeräten gerichtet.

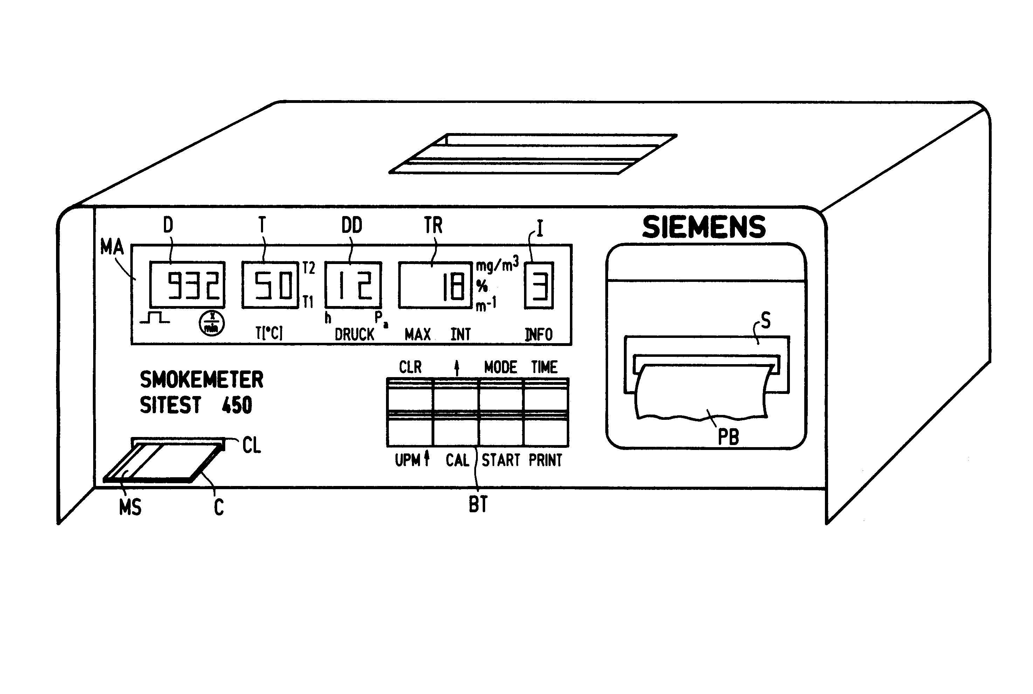

Die Erfindung wird desweiteren anhand eines in der Figur dargestellten Ausführungsbeispieles näher erläutert.

In der Figur ist ein Beispiel für ein Meßgerät zur Erfassung bestimmter Betriebsparameter von Verbrennungsmotoren dargestellt. Es handelt sich beispielhaft um ein Gerät zur Messung der Trübung von Rauchgas, welches als sogenanntes "SMOKEMETER" bevorzugt zur Auswertung der Rußdichte im Abgas von Dieselmotoren verwendet wird. Die Erfindung ist aber uneingeschränkt auch bei andersartigen Meßgeräten für stationäre bzw. bewegliche Verbrennungskraftmaschinen verwendbar.

Bei dem als Beispiel dienenden SMOKEMETER werden eine Vielzahl bestimmter Betriebsparameter als Istwerte erfaßt und über eine Multifunktionsanzeige MA angezeigt. Als Betriebsparameter dienen dabei beispielsweise die aktuelle Motorzahl D, der Temperaturistwert T des Abgases, ein zwischen zwei unterschiedlichen Stellen in der Auspuffanlage des Verbrennungsmotores bzw. einer nachgeschalteten Meßeinrichtung vorliegende Differenzdruck, und schließlich die im Zentrum der Messung stehende und ein Maß für die Rußdichte bildende Abgastrübung TR. Für all diese Betriebsparameter müssen motortypspezifische charakteristische Kennwerte vorliegen, um eine auswertbare Messung am jeweils vorliegenden Motortyp zu ermöglichen. So müssen für die jeweiligen Betriebsparameter bevorzugt die motortypsspezifischen Meßbereiche, Soll- und Grenzwerte vorgegeben werden, um zum einen eine Messung in den vorgeschriebenen bzw. gewünschten Motorarbeitspunkten zu ermöglichen, und zum anderen Abweichungen des Istverhaltens vom gewünschten Sollverhalten des Motors diagnostizieren zu können.

Erfindungsgemäß werden die für den jeweiligen Motortyp charakteristischen Kennwerte mit Hilfe einer Leseeinrichtung CL in das Meßgerät geladen. Diese ist bei dem in der Figur beispielhaft dargestellten Gerät hinter einem Aufnahmeschlitz in der Frontplatte des Gerätes angebracht. Über diesen Aufnahmeschlitz können erfindungsgemäß kartenförmige Träger C in die Leseeinrichtung CL eingeschoben werden. Auf diese Weise ist es besonders vorteilhaft auf einfache und schnelle Weise möglich, durch Einführen des entsprechenden kartenförmigen Trägers C in das Meßgerät die für die jeweils zu untersuchenden Motortyp charakteristischen Kennwerte einzulesen.

In einer ersten, besonders einfachen Betriebsweise werden die für den jeweiligen Motortyp charakteristischen Kennwerte jeweils zu Beginn einer Betriebsdatenerfassung dicht über die Leseeinrichtung in das Meßgerät geladen. Bei einer zweiten Ausführungsform verfügt das Meßgerät über einen zusätzlichen Speicher, in den die über die Leseeinrichtung geladenen, für den jeweiligen Motortyp charakteristischen Kennwerte in Form von motortypsspezifischen Datensätzen abgelegt, und bei Bedarf wieder aktiviert werden können. Dies hat den Vorteil, daß zu Beginn der Ausmessung anderer Motortypen nicht ständig deren charakteristischen Kennwerte neu eingelesen werden müssen. Vielmehr können deren Datensätze, soweit vorhanden, aus dem Meßgerätespeicher abgerufen und aktiviert werden. Bei dem in der Figur beispielhaft dargestellten Meßgerät sind hierzu die in einer Bedientastatur BT mit "MODE" und mit einem nach obengerichteten Pfeil bezeichneten Drucktasten und die mit "INFO" bezeichnete Anzeige in der Multifunktionsanzeige MA vorgesehen. Der zu einem bestimmten Motortyp gehörige Satz an charakteristischen Kennwerten kann somit durch einmaliges Drücken der Taste MODE und gegebenenfalls wiederholtes Drücken der mit einem nach oben gerichteten Pfeil gekennzeichneten Taste wieder aufgefunden und aktiviert werden. In der Praxis wird es von der Anzahl der vorkommenden Motortypen abhängen, ob zu Beginn einer Betriebsparametermessung die charakteristischen Kennwerte des jeweiligen Verbrennungsmotors direkt über die Leseeinrichtung durch Einführen des entsprechenden kartenförmigen Trägers jeweils neu geladen werden sollten, oder aus dem Speicher des Meßgerätes abgerufen werden können. Ist die Anzahl der zu erwartenden Motortypen sehr groß, so wird es vorteilhaft sein, die dazugehörigen charakteristischen Kennwerte jeweils zu Beginn der Betriebsdatenerfassung direkt über die Leseeinrichtung durch Einführen des entsprechenden kartenförmigen Trägers neu zu laden. Ist dagegen die Anzahl unterschiedlicher Motortypen für eine Bedienperson überschaubar, so wird es ausreichen sein, die dazugehörigen charakteristischen Kennwerte einmal komplett in den Speicher des Meßgerätes zu laden, und die einzelnen Datensätze bei Bedarf zu aktivieren.

Bei dem in der Figur beispielhaft dargestellten Meßgerät ist zur Protokollierung der gewünschten Betriebsparameter z.B. während bzw. am Ende der Messung ein Streifendrucker S vorgesehen. Auf dem ausgegebenen Protokollbogen BP können dann z.B. die Meßbereiche, Soll- und Grenzwerte des jeweiligen Motortypes gemeinsam mit den aktuell vorliegenden Istwerten ausgegeben werden.

Als Leseeinrichtung sind unterschiedliche Ausführungsformen einsetzbar. So kann die Leseeinrichtung eine Übertragung der gewünschten Kennwerte von kartenförmigen Trägern mit zumindest teilweise magnetisch oder optisch abtastbarer Oberfläche ermöglichen. Bei optischer Abtastung können die zu übertragenden Kennwerte z.B. in Form von sogenannten Streifenkodierungen auf der Trägeroberfläche aufgebracht sein. Bei der in der Figur beispielhaft dargestellten Ausführungsform verfügt der kartenförmige Träger C über eine zumindest teilweise magnetisch abtastbare Oberfläche MS. Derartige kartenförmige Träger mit einer zumindest teilweise magnetisch abtastbaren Oberfläche können einen Aufbau besitzen, welcher den bekannten Scheck- bzw. Kreditkarten entspricht. Bei einer weiteren, besonders vorteilhaften Ausführungsform der Erfindung dient als Leseeinrichtung ein sogenannter Chipkartenleser. Die dazugehörigen Chipkarten haben den besonderen Vorteil, daß eine große Menge von motorspezifischen charakteristischen Kennwerten auf besonders sichere und robuste Weise abgespeichert werden können. Auf der Oberfläche einer derartigen Chipkarte ist flächig und für den Benutzer nahezu unbemerkbar eine Miniaturrecheneinrichtung aufgebracht. Diese enthält zumindest einen Mikroprozessor mit einer Speichereinrichtung, z.B. einen sogenannten EE-PROM. Die gespeicherten, für den jeweiligen Motortyp charakteristischen Kennwerte können in diesem Fall von der Lesseinrichtung CL berührungslos insbesondere mit induktiven Übertragungsmitteln von der Chipkarte gelesen werden.

Die Erfindung hat somit den Vorteil, die Handhabbarkeit und den Betrieb eines Meßgerätes zur Erfassung bestimmter Betriebsparameter von Verbrennungsmotoren erheblich zu verbessern. Für jeden der zu erwartenden Motortypen braucht somit lediglich ein besonders leicht handhabbarer, kartenförmigen Träger C z.B. in Form einer sogenannten "Motorkennkarte" vorrätig gehalten zu werden. Im Gegensatz zu herkömmlichen Speichermodulen können derartige kartenförmiger Träger C z.B. in Form einer sogenannten "Motorenkarte" vorrätig gehalten zu werden. Im Gegensatz zu herkömmlichen Speichermodulen können derartige kartenförmige Träger auch im rauhen Betrieb z.B. von Kraftfahrzeugproduktionsstätten bzw. Kraftfahrzeugwerkstätten leicht und sicher gehandhabt, bevorratet und aufbewahrt werden.

## Patentansprüche

1. Meßgerät zur Erfassung bestimmter Betriebsparameter von Verbrennungsmotoren, insbesondere ein Zündungstester, Abgastester bzw. Rußdichtemeßgerät, mit einer Leseeinrichtung (CL), womit für die Messung der Betriebsparameter benötigte und für den jeweiligen Motortyp charakteristische Kennwerte, insbesondere Meßbereiche, Soll- und Grenzwerte, von einem kartenförmigen Träger (C) eingelesen werden.

2. Vorrichtung nach Anspruch 1, **dadurch gekennzeichnet,** daß die für einen Motortyp charakteristischen Kennwerte jeweils zu Beginn einer Betriebsparametererfassung direkt über die Leseeinrichtung (CL) in das Meßgerät geladen werden.

3. Vorrichtung nach Anspruch 1 oder 2, **dadurch gekennzeichnet,** daß über die Leseeinrichtung (CL) in das Meßgerät geladene, für einen Motortyp charakteristische Kennwerte in Form von motortypspezifischen Datensätzen in einem Speicher abgelegt und bei Bedarf wieder aktiviert werden können.

4. Vorrichtung nach einem der vorangegangenen Ansprüche, **dadurch gekennzeichnet,** daß die Leseeinrichtung (CL) ein berührungsloses Übertragen der für den jeweiligen Motortyp charakteristischen Kennwerte von Chipkarten als kartenförmige Träger (C) ermöglicht.

5. Vorrichtung nach einem der Ansprüche 1 bis 3, **dadurch gekennzeichnet,** daß die Leseeinrichtung (CL) eine Übertragung der für den jeweiligen Motortyp charakteristischen Kennwerte von kartenförmigen Trägern (C) mit mindestens teilweise magnetisch abtastbarer Oberfläche ermöglicht.

6. Vorrichtung nach einem der Ansprüche 1 bis 3, **dadurch gekennzeichnet,** daß die Leseeinrichtung (CL) eine Übertragung der für den jeweiligen Motortyp charakteristischen Kennwerte von kartenförmigen Trägern (C) mit mindestens teilweise optisch abtastbarer Oberfläche ermöglicht.

7. Verwendung einer Leseeinrichtung für kartenförmige Träger (C) bei einem Meßgerät zur Erfassung bestimmter Betriebsparameter von Verbrennungsmotoren, insbesondere bei einem Zündungstester, Abgastester bzw. Rußdichtemeßgerät, womit für die Messung der Betriebsparameter benötigte und für den jeweiligen Motortyp charakteristische Kennwerte, insbesondere Meßbereiche, Soll- und Grenzwerte, eingelesen werden.

8. Verwendung nach Anspruch 7, **dadurch gekennzeichnet,** daß die für einen Motortyp charakteristischen Kennwerte jeweils zu Beginn einer Betriebsparametererfassung direkt über die Leseeinrichtung (CL) in das Meßgerät geladen werden.

9. Verwendung nach Anspruch 7 oder 8, **dadurch gekennzeichnet,** daß über die Leseeinrichtung (CL) in das Meßgerät geladene, für einen Motortyp charakteristische Kennwerte in Form von motortypspezifischen Datensätzen in einem Speicher abgelegt und bei Bedarf wieder aktiviert werden können.

10. Verwendung nach einem der Ansprüche 7 bis 9, **dadurch gekennzeichnet,** daß die Leseeinrichtung (CL) ein berührungsloses Übertragen der für den jeweiligen Motortyp charakteristischen Kennwerte von Chipkarten als kartenförmige Träger (C) ermöglicht.

11. Verwendung nach einem der Ansprüche 7 bis 9, **dadurch gekennzeichnet,** daß die Leseeinrichtung (CL) eine Übertragung der für den jeweiligen Motortyp charakteristischen Kennwerte von kartenförmigen Trägern (C) mit mindestens teilweise magnetisch abtastbarer Oberfläche ermöglicht.

12. Verwendung nach einem der Ansprüche 7 bis 9, **dadurch gekennzeichnet,** daß die Leseeinrichtung (CL) eine Übertragung der für den jeweiligen Motortyp charakteristischen Kennwerte von kartenförmigen Trägern (C) mit mindestens teilweise optisch abtastbarer Oberfläche ermöglicht.

SIEMENS

SMOKEMETER
SITEST 450